(19) Europäisches Patentamt
European Patent Office
Office européen des brevets

(11) Veröffentlichungsnummer: **0 372 315 B1**

(12) **EUROPÄISCHE PATENTSCHRIFT**

(45) Veröffentlichungstag der Patentschrift: **26.01.94**

(51) Int. Cl.[5]: **C09B 62/04**, D06P 1/382

(21) Anmeldenummer: **89121730.9**

(22) Anmeldetag: **24.11.89**

(54) **Reaktivfarbstoffe auf Basis von Kupfer-Formazan.**

(30) Priorität: **02.12.88 DE 3840653**

(43) Veröffentlichungstag der Anmeldung:
**13.06.90 Patentblatt 90/24**

(45) Bekanntmachung des Hinweises auf die Patenterteilung:
**26.01.94 Patentblatt 94/04**

(84) Benannte Vertragsstaaten:
**CH DE FR GB IT LI**

(56) Entgegenhaltungen:
**FR-A- 2 173 121**
**GB-A- 1 461 125**

(73) Patentinhaber: **BASF Aktiengesellschaft**
**Carl-Bosch-Strasse 38**
**D-67063 Ludwigshafen(DE)**

(72) Erfinder: **Pandl, Klaus, Dr.**
**Schumannstrasse 18**
**D-6700 Ludwigshafen(DE)**
Erfinder: **Patsch, Manfred, Dr.**
**Fritz-Wendel-Strasse 4**
**D-6706 Wachenheim(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die vorliegende Erfindung betrifft neue Kupfer-Formazanreaktivfarbstoffe der Formel I

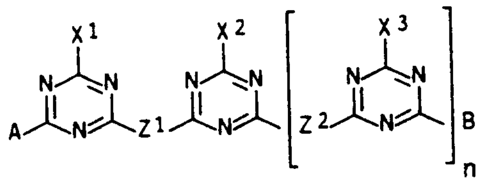

(I)

in Form der freien Säure oder in Form ihrer Salze, wobei

n 0 oder 1,

$X^1$ und $X^3$ gleich oder verschieden sind und unabhängig voneinander jeweils Chlor oder Fluor,

$X^2$ Chlor,

A einen Rest der Formel IIa

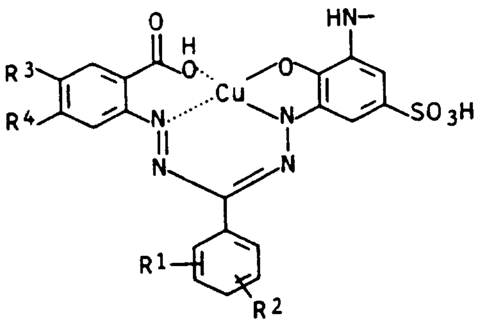

(IIa),

worin

$R^1$ für Wasserstoff, Hydroxysulfonyl, $C_1$-$C_4$-Alkoxy oder Chlor,

$R^2$ für Wasserstoff oder Hydroxysulfonyl und

einer der beiden Reste $R^3$ und $R^4$ für Wasserstoff und der andere für Hydroxysulfonyl stehen, oder wenn mindestens einer der beiden Reste $R^1$ und $R^2$ Hydroxysulfonyl ist, $R^3$ und $R^4$ auch gleichzeitig Wasserstoff sein können, oder einen Rest der Formel IIb

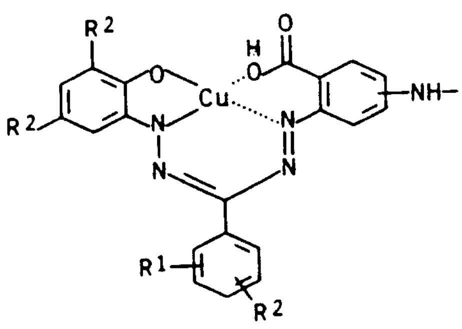

(IIb),

worin

$R^1$ und $R^2$ jeweils die obengenannte Bedeutung besitzen,

$Z^1$ und $Z^2$ gleich oder verschieden sind und unabhängig voneinander jeweils einen Rest der Formel III

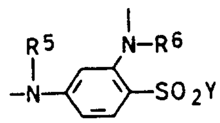

(III),

worin

$R^5$ und $R^6$ gleich oder verschieden sind und unabhängig voneinander jeweils für Wasserstoff oder gegebenenfalls durch Cyano oder Hydroxy substituiertes $C_1$-$C_4$-Alkyl und

Y für Hydroxy oder den Rest $NR^7R^8$ stehen, in dem $R^7$ und $R^8$ gleich oder verschieden sind und unabhängig voneinander jeweils die Bedeutung von Wasserstoff oder von gegebenenfalls durch Cyano, Hydroxy oder Hydroxysulfonyl substituiertem $C_1$-$C_4$-Alkyl besitzen, oder die Reste $R^7$ und $R^8$ zusammen mit dem sie verbindenden Stickstoffatom einen 5- oder 6-gliedrigen Heterocyclus, der gegebenenfalls weitere Heteroatome aufweist, darstellen, und

B Chlor, den Rest $NR^9R^{10}$, in dem $R^9$ und $R^{10}$ gleich oder verschieden sind und unabhängig voneinander jeweils die Bedeutung von Wasserstoff oder von gegebenenfalls durch Cyano, Hydroxy oder Hydroxysulfonyl substituiertem $C_1$-$C_4$-Alkyl besitzen, oder einer der beiden Reste $R^9$ oder $R^{10}$ auch für Phenyl steht, das gegebenenfalls durch Hydroxysulfonyl, Sulfamoyl, $C_1$-$C_4$-Alkyl, Halogen, Cyano oder $C_1$-$C_4$-Alkoxy substituiert ist, oder die Reste $R^9$ und $R^{10}$ zusammen mit dem sie verbindenden Stickstoffatom einen 5-oder 6-gliedrigen Heterocyclus, der gegebenenfalls weitere Heteroatome aufweist, darstellen, oder den obengenannten Rest A bedeuten,

mit der Maßgabe, a) daß $R^5$ und $R^6$ nicht gleichzeitig für Wasserstoff stehen, b) daß wenn n O und B den Rest A bedeuten, mindestens ein Restepaar A/B oder $X^1/X^2$ verschieden ist, c) daß wenn n 1 bedeutet, der Rest B für den Rest A steht, und d) daß $X^2$ auch für Fluor steht, wenn B nicht Chlor bedeutet.

Aus der DE-A-3 434 818 sind Kupfer-Formazanreaktivfarbstoffe bekannt, die einen Monochlortriazinrest als Reaktivankersystem aufweisen. Es hat sich jedoch gezeigt, daß die dort beschriebenen Farbstoffe ungenügende anwendungstechnische Eigenschaften, z. B. unzureichende Löslichkeit im Färbebad, geringe Farbstärke sowie ungenügendes Farbaufbauvermögen bei Anwendung in Färbeverfahren für mittlere oder tiefe Farbstärken besitzen.

Weiterhin sind aus der FR-A-2 173 121 Kupfer-Formazanreaktivfarbstoffe bekannt, die zwar die Struktur der Formel I aufweisen, für die jedoch nicht die obengenannten Maßgaben a) und b) zutreffen.

Schließlich sind in den älteren Anmeldungen EP-A-315 046 und EP-A-315 045 Kupfer-Formazanreaktivfarbstoffe beschrieben, die eine ähnliche Struktur aufweisen wie die obengenannten Farbstoffe der Formel I.

Aufgabe der vorliegenden Erfindung war es nun, neue Reaktivfarbstoffe auf Basis von Kupfer-Formazanen bereitzustellen, die über vorteilhafte anwendungstechnische Eigenschaften verfügen.

Demgemäß wurden die oben näher bezeichneten Kupfer-Formazanreaktivfarbstoffe der Formel I gefunden.

Wenn in Formel I der Rest B für den Rest A steht, so können, sofern nicht anders vermerkt, die beiden in der Formel auftretenden Reste A gleich oder verschieden sein.

Reste $R^1$ sind z.B. Methoxy, Ethoxy, Propoxy, Isopropoxy, Butoxy, Isobutoxy oder sec-Butoxy.

Reste $R^5$, $R^6$, $R^7$, $R^8$, $R^9$ und $R^{10}$ sind beispielsweise Methyl, Ethyl, Propyl, Isopropyl, Butyl, Isobutyl, sec-Butyl, 2-Cyanoethyl, 2- oder 3-Cyanopropyl, 1- oder 2-Cyanoprop-2-yl, 2- oder 4-Cyanobutyl, 2-Hydroxyethyl, 2- oder 3-Hydroxypropyl oder 2- oder 4-Hydroxybutyl.

Reste $R^7$, $R^8$, $R^9$ und $R^{10}$ sind weiterhin z. B. 2-Hydroxysulfonylethyl, 2- oder 3-Hydroxysulfonylpropyl oder 2- oder 4-Hydroxysulfonylbutyl.

Die Reste Y und B stehen beispielsweise für Amino, Mono- oder Dimethylamino, Mono- oder Diethylamino, Mono- oder Dipropylamino, Mono- oder Diisopropylamino, Mono- oder Dibutylamino, N-Methyl-N-ethyl-amino, Mono- oder Bis(2-cyanoethyl)amino, Mono- oder Bis(2-hydroxyethyl)amino, N-Ethyl-N-(2-cyanoethyl)amino, N-Ethyl-N-(2-hydroxyethyl)amino, 2-Hydroxysulfonylethylamino oder N-Ethyl-N-(2-hydroxysulfonylethyl)amino.

Der Rest Y steht weiterhin beispielsweise für Pyrrolidino, Piperidino, Morpholino, Piperazino oder N-($C_1$-$C_4$-Alkyl)piperazino, wie N-Methyl- oder N-Ethylpiperazino.

Der Rest B steht weiterhin beispielsweise für Phenylamino, N-Methyl-N-phenylamino, N-Ethyl-N-phenylamino, (2-, 3- oder 4-Hydroxysulfonylphenyl)amino, (2,4- oder 2,5-Dihydroxysulfonylphenyl)-amino, (2- oder 3-Methyl-4-hydroxysulfonylphenyl)amino, (2,5-Dimethyl-4-hydroxysulfonylphenyl)amino, (5-Chlor-2-hydroxysulfonylphenyl)amino, (4-Methoxy-2-hydroxysulfonylphenyl)amino, (2-Methoxy-4-hydroxysulfonyl-phenyl)amino, (2-Chlor-5-hydroxysulfonylphenyl)amino, (2-Methyl-5-hydroxy-sulfonylphenyl)amino, (2-Ethyl-5-hydroxysulfonylphenyl)amino, (4-Methoxy-3-hydroxysulfonylphenyl)amino, (4-Chlor-3-hydroxysulfonyl-phenyl)amino, (4-Methyl-3-hydroxysulfonylphenyl)amino, (2-Chlor-3-methyl-5-hydroxysulfonylphenyl)amino, (2-Chlor-4-methyl-5-hydroxysulfonylphenyl)amino, 3-Sulfamoylphenylamino, 3-(N-Methyl-sulfamoyl)-phenylamino, 3-(N-Ethylsulfamoyl)phenylamino, 3-(N,N-Dimethyl-sulfamoyl)phenylamino, 3-(N,N-Diethylsulfamoyl)phenylamino, 3-[N-(2-Hydroxyethyl)sulfamoyl]phenylamino, 3-[N,N-Bis(2-hydroxyethyl)-sulfamoyl]-phenylamino, 3-Morpholinosulfonylphenylamino, [3-N-(2-Hydroxy-sulfonylethyl)sulfamoylphenyl]amino, 4-Chlor-3-sulfamoylphenylamino, 4-Chlor-3-(N-methylsulfamoyl)phenylamino, 4-Chlor-3-(N-ethylsulfamoyl)-phenylamino, 4-Chlor-3-(N,N-dimethylsulfamoyl)phenylamino, 4-Chlor-3-(N,N-diethylsulfomoyl)phenylamino, 4-Chlor-3-[N-(2-hydroxyethyl)-sulfamoyl]phenylamino, 4-Chlor-3-[N,N-bis(2-hydroxyethyl)sulfamoyl]phenyl-amino, 4-Chlor-3-morpholinosulfonylphenylamino, 4-Chlor-3-[N-(2-hydroxy-sulfonylethyl)sulfamoyl]-phenylamino, 4-Methyl-3-sulfamoylphenylamino, 4-Methyl-3-(N-methylsulfamoyl)phenylamino, 4-Methyl-3-(N-ethyl-sulfamoyl)phenylamino, 4-Methyl-3-(N,N-dimethylsulfamoyl)phenylamino, 4-Methyl-3-(N,N-diethylsulfamoyl)phenyl-amino, 4-Methyl-3-[N-(2-hydroxy-ethyl)sulfamoyl]phenylamino, 4-Methyl-3-[N,N-bis(2-hydroxyethyl)-sulfamoyl]phenylamino, 4-Methyl-3-morpholinosulfonylphenylamino oder 4-Methyl-3-[N-(2-hydroxy-sulfonylethyl)sulfamoyl]phenylamino.

Als Salze der Kupfer-Formazanreaktivfarbstoffe der Formel I kommen Metall- oder Ammoniumsalze in Betracht. Metallsalze sind insbesondere die Lithium-, Natrium- oder Kaliumsalze. Unter Ammoniumsalzen im erfindungsgemäßen Sinne sind solche Salze zu verstehen, die entweder unsubstituierte oder substituierte Ammoniumkationen aufweisen. Substituierte Ammoniumkationen sind z. B. Monoalkyl-, Dialkyl-, Trialkyl-, Tetraalkyl- oder Benzyltrialkylammoniumkationen oder solche Kationen, die sich von stickstoffhaltigen fünf- oder sechsgliedrigen gesättigten Heterocyclen ableiten, wie Pyrrolidinium-, Piperidinium-, Morpholinium, Piperazinium- oder N-Alkylpiperaziniumkationen oder deren N-monoalkyl- oder N,N-dialkylsubstituierte Produkte. Unter Alkyl ist dabei in diesem Zusammenhang im allgemeinen geradkettiges oder verzweigtes $C_1$-$C_{20}$-Alkyl zu verstehen, das durch Hydroxylgruppen substituiert und/oder durch Sauerstoffatome unterbrochen sein kann.

Bevorzugt sind Kupfer-Formazanreaktivfarbstoffe der Formel I, in der $Z^1$ und $Z^2$ einen Rest der Formel IIIa

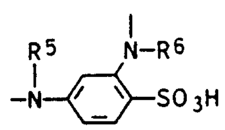

(IIIa)

bedeuten, worin $R^5$ und $R^6$ unabhängig voneinander für Wasserstoff, Methyl oder Ethyl stehen.

Besonders bevorzugt sind Kupfer-Formazanreaktivfarbstoffe der Formel I, in der $Z^1$ und $Z^2$ einen Rest der Formel IIIb

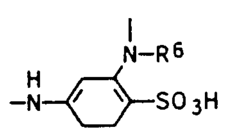

(IIIb)

bedeuten, worin $R^6$ für Methyl oder Ethyl steht.

Ganz besonders hervorzuheben sind Kupfer-Formazanreaktivfarbstoffe der Formel Ia

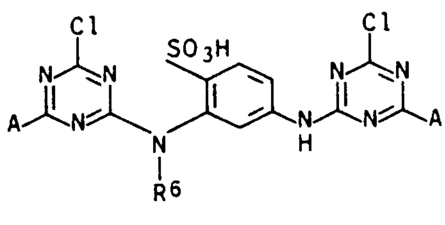

(Ia),

in der $R^6$ für Methyl oder Ethyl steht und A jeweils die obengenannte Bedeutung besitzt, wobei die beiden Reste A verschieden voneinander sind.

Weiterhin ganz besonders hervorzuheben sind Kupfer-Formazanreaktiv-farbstoffe der Formel Ib

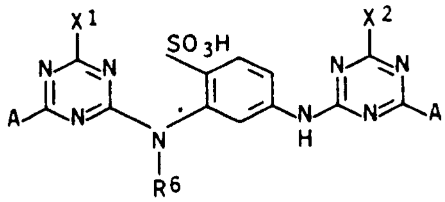

(Ib),

in der $R^6$ für Methyl oder Ethyl und einer der Substituenten $X^1$ und $X^2$ für Chlor und der andere für Fluor stehen und die beiden Reste A gleich oder verschieden sind und unabhängig voneinander jeweils die obengenannte Bedeutung besitzen.

Weiterhin ganz besonders hervorzuheben sind Kupfer-Formazanreaktivfarbstoffe der Formel Ic

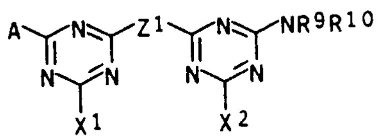

(Ic),

in der $Z^1$ einen Rest der Formel IIIb

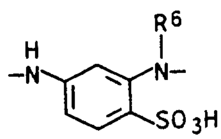

(IIIb),

worin $R^6$ für Methyl oder Ethyl steht, sowie $X^1$ und $X^2$ unabhängig voneinander Chlor oder Fluor bedeuten und der Rest $NR^9R^{10}$ die obengenannte Bedeutung besitzt.

Weiterhin ganz besonders hervorzugeben sind Kupfer-Formazanreaktivfarbstoffe der Formel Id

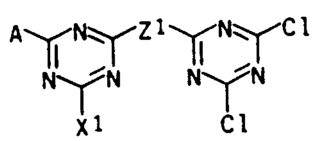

(Id),

in der A die obengenannte Bedeutung besitzt und $X^1$ Chlor oder Fluor und $Z^1$ einen Rest der Formel IIIb

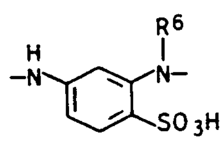

(IIIb),

worin $R^6$ für Methyl oder Ethyl steht, bedeuten.

Weiterhin ganz besonders hervorzuheben sind Kupfer-Formazanreaktivfarbstoffe der Formel Ie

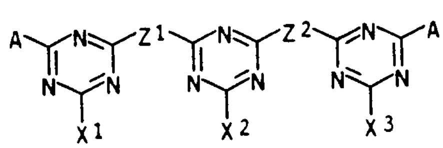

(Ie),

in der die beiden Reste A gleich oder verschieden sind und unabhängig voneinander jeweils die obengenannte Bedeutung besitzen, sowie die Reste $X^1$, $X^2$ und $X^3$ unabhängig voneinander Chlor oder

Fluor und $Z^1$ und $Z^2$ unabhängig voneinander einen Rest der Formel IIIb

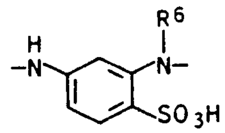

(IIIb),

worin $R^6$ für Methyl oder Ethyl steht, bedeuten.

Die neuen Kupfer-Formazanreaktivfarbstoffe der Formel I können nach an sich bekannten Methoden hergestellt werden. Beispielsweise erhält man Farbstoffe der Formel Ia durch Umsetzung von Cyanurchlorid mit einem Kupfer-Formazanfarbstoff der Formel IV

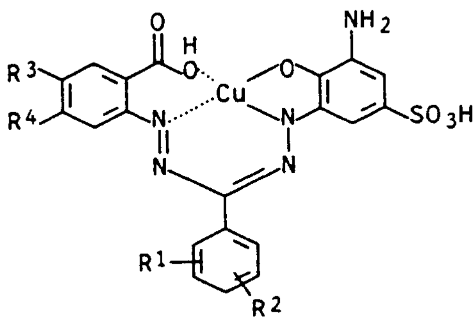

(IV),

in der $R^1$, $R^2$, $R^3$ und $R^4$ jeweils die obengenannte Bedeutung besitzen, wobei ein Dichlortriazinfarbstoff der Formel V

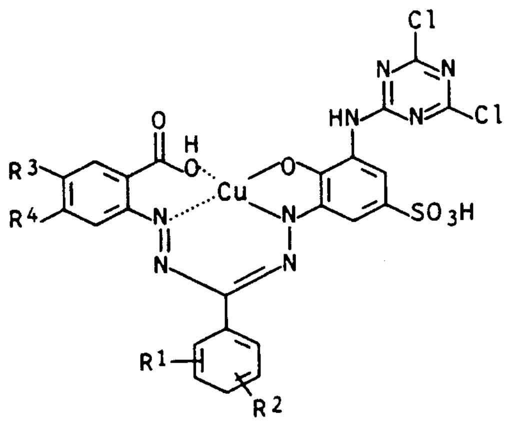

(V),

in der $R^1$, $R^2$, $R^3$ und $R^4$ jeweils die obengenannte Bedeutung besitzen, entsteht, der dann durch Weiterreaktion mit einem Diamin der Formel VI

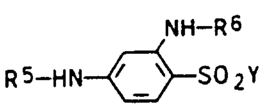

(VI),

in der $R^5$, $R^6$ und Y jeweils die obengenannte Bedeutung besitzen, in einen Farbstoff der Formel VII

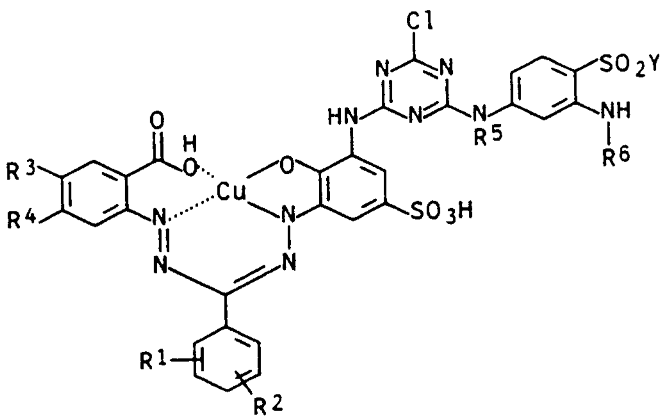

(VII),

in der $R^1$, $R^2$, $R^3$, $R^4$, $R^5$, $R^6$ und Y jeweils die obengenannte Bedeutung besitzen, übergeführt wird.

Durch Umsetzung des Farbstoffs der Formel VII mit einem solchen Dichlortriazinfarbstoff der Formel V, der verschieden ist von dem Farbstoff V, der bereits in Farbstoff VII eingebaut wurde, entsteht der erfindungsgemäße Farbstoff der Formel Ia.

Farbstoffe der Formel Ib erhält man beispielsweise durch Umsetzung von Cyanurfluorid mit einem Kupfer-Formazanfarbstoff der Formel IV, wobei der Difluortriazinfarbstoff der Formel VIII

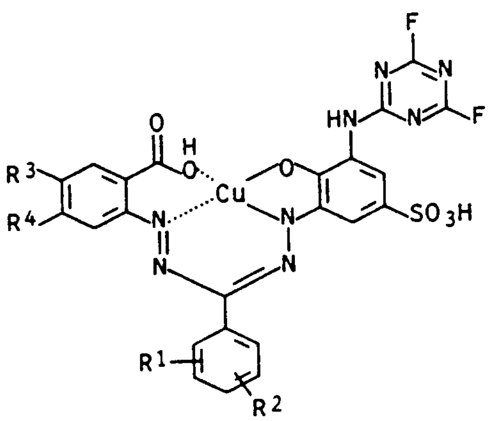

(VIII),

in der $R^1$, $R^2$, $R^3$ und $R^4$ jeweils die obengenannte Bedeutung besitzen, entsteht, der dann durch Weiterreaktion mit einem Farbstoff der Formel VII in den erfindungsgemäßen Farbstoff der Formel Ib übergeführt wird.

Es ist auch möglich, Farbstoffe der Formel Ib herzustellen, indem man das Diamin der Formel VI mit dem Difluortriazinfarbstoff der Formel VIII zunächst zu einem Farbstoff der Formel IX

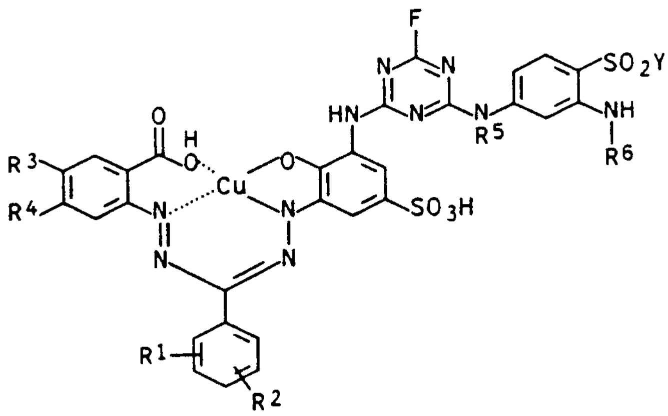

(IX),

in der $R^1$, $R^2$, $R^3$, $R^4$, $R^5$, $R^6$ und Y jeweils die obengenannte Bedeutung besitzen, umsetzt, und diesen dann mit dem Farbstoff der Formel V reagieren läßt.

Kupfer-Formazanreaktivfarbstoffe der Formel Id

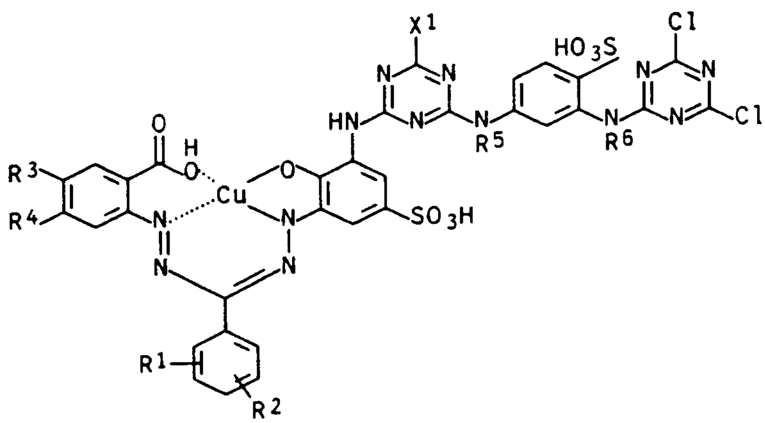

(Id),

in der $R^1$, $R^2$, $R^3$, $R^4$, $R^5$, $R^6$ und $X^1$ jeweils die obengenannten Bedeutung besitzen, erhält man beispielsweise, indem man Cyanurchlorid mit Farbstoffen der Formel VIII oder IX umsetzt.

Kupfer-Formazanreaktivfarbstoffe der Formel Ic erhält man beispielsweise indem man ein Amin der Formel X

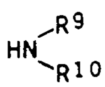

(X),

in der $R^9$ und $R^{10}$ jeweils die obengenannten Bedeutung besitzen, mit einem Farbstoff der Formel Id zur Reaktion bringt, oder alternativ, indem man ein Amin der Formel X mit Cyanurfluorid zunächst zu einem Difluortriazin der Formel XI

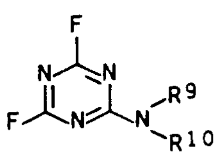

(XI),

in der $R^9$ und $R^{10}$ jeweils die oben genannten Bedeutung besitzen, umsetzt, das dann einer Weiterreaktion mit einem Farbstoff der Formel VIII oder IX unterworfen wird.

Kupfer-Formazanreaktivfarbstoffe der Formel Ie erhält man beispielsweise, indem man einen Dichlortriazinfarbstoff der Formel Id mit einem Kupfer-Formazanfarbstoff der Formel VII oder IX zur Reaktion bringt. Es ist jedoch auch möglich, den erfindungsgemäßen Farbstoff der Formel Ie durch Reaktion des Monochlortriazinfarbstoffs der Formel VII oder des Monofluortriazinfarbstoffs der Formel IX mit Cyanurfluorid zunächst zu einem Doppelankerfarbstoff der Formel XII

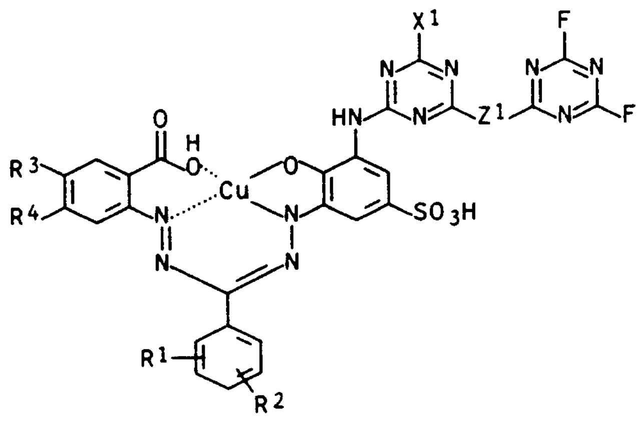

(XII),

in der $R^1$, $R^2$, $R^3$, $R^4$, $X^1$ und $Z^1$ jeweils die obengenannten Bedeutung besitzen, und Weiterreaktion des Doppelankerfarbstoffs der Formel XII mit einem Farbstoff der Formel VII oder IX herzustellen.

Eine weitere Synthesemöglichkeit für Farbstoffe der Formel Ie besteht in der Reaktion eines Diamins der Formel VI mit einem Farbstoff der Formel Id oder XII zu einem Farbstoff der Formel XIV

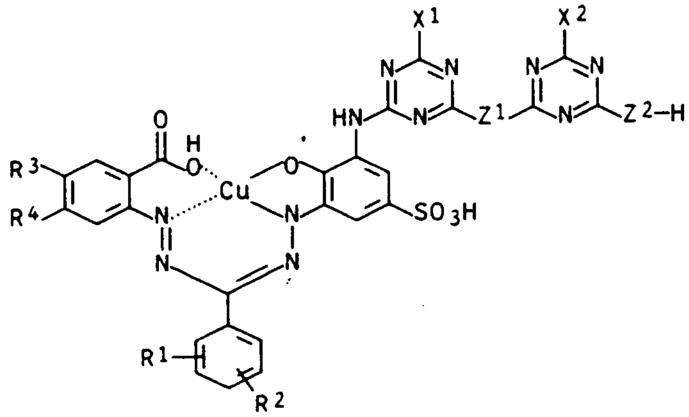

(XIV),

in der $R^1$, $R^2$, $R^3$, $R^4$, $Z^1$, $Z^2$, $X^1$ und $X^2$ jeweils die obengenannte Bedeutung besitzen, und Weiterreaktion mit einem Dichlortriazinfarbstoff der Formel V oder einem Difluortriazinfarbstoff der Formel VIII.

Der dem Rest der Formel II zugrundeliegende Kupfer-Formazanfarbstoff (die in der Formel II vorhandene Gruppierung -NH- ist durch Wasserstoff abgesättigt) kann ebenfalls nach an sich bekannten Methoden hergestellt werden. Beispielsweise erhält man ihn, wenn man das Diazoniumsalz von 1-Hydroxy-2-amino-6-acetylaminobenzol-4-sulfonsäure mit einem Phenylhydrazon der Formel XV

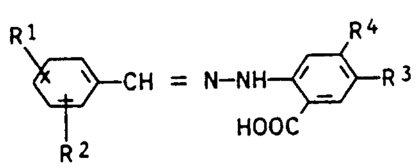

(XV),

in der $R^1$, $R^2$, $R^3$ und $R^4$ jeweils die oben genannte Bedeutung besitzen, kuppelt, anschließend aus dem Reaktionsprodukt den Kupfer-Komplex durch Umsetzung mit Kupfersulfat oder Kupferchlorid herstellt und schließlich durch Hydrolyse die Acetylaminogruppe in die freie Aminogruppe überführt (vgl. Houben-Weyl-Methoden der Organischen Chemie, Band 10/2, Seiten 487 und 480, 1967).

Weitere Angaben zur Herstellung können den Beispielen entnommen werden.

Die neuen Kupfer-Formazanreaktivfarbstoffe der Formel I eignen sich zum Färben und Bedrucken von Hydroxygruppen oder Stickstoff enthaltenden organischen Substraten. Solche Substrate sind beispielsweise Leder oder Fasermaterial, das überwiegend natürliche oder synthetische Polyamide oder natürliche oder regenerierte Cellulose enthält. Vorzugsweise eignen sich die neuen Farbstoffe zum Färben und Bedrucken von Textilmaterial auf der Basis von Baumwolle. Besonders vorteilhaft werden sie dabei nach dem Ausziehverfahren gefärbt.

Die erfindungsgemäßen Farbstoffe ergeben Ausfärbungen in mittelblauen Tönen. Sie weisen eine gute Löslichkeit auf und besitzen ein sehr hoch liegendes Echtheitsniveau, insbesondere eine hohe Naßechtheit. Das Farbaufbauvermögen bei mittleren bis tiefen Färbungen ist besonders hoch.

Die folgenden Beispiele sollen die Erfindung näher erläutern.

Beispiel 1

Zu einer Lösung von 62 g des Natriumsalzes der Verbindung der Formel

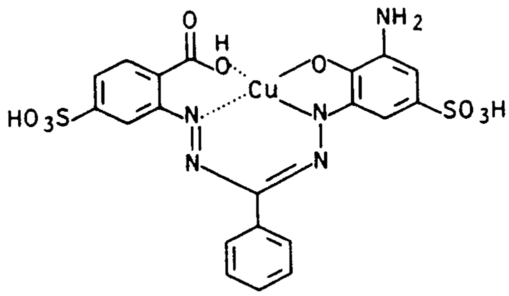

in 150 ml Wasser und 150 g Eis wurden 19,5 g Cyanurchlorid gegeben. Der pH-Wert des Reaktionsgemisches wurde bis zum Ende der Acylierung durch Zugabe von Natriumhydrogencarbonat bei 5 bis 5,5 gehalten. Nach 2 Stunden wurden 19 g 4-Amino-2-(N-methylamino)benzolsulfonsäure, gelöst in 200 ml Wasser, eingetragen. Die Suspension wurde auf 40 °C erwärmt und der pH-Wert durch Zusatz von Natriumhydrogencarbonat bei 7 bis 8 gehalten.

Nach 6 Stunden wurde der gebildete Farbstoff der Formel

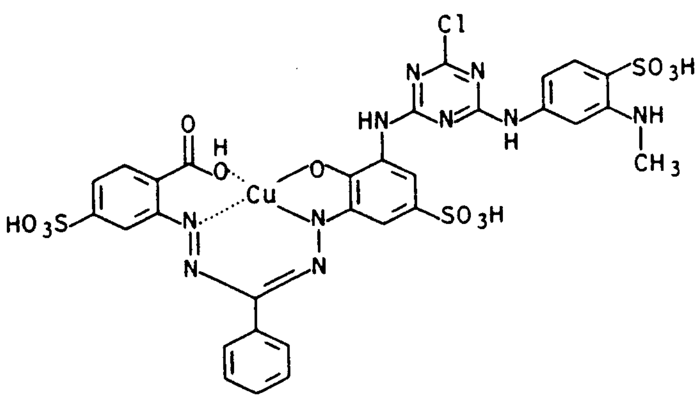

in Lösung mit 78 g des Dichlortriazinfarbstoffs der Formel

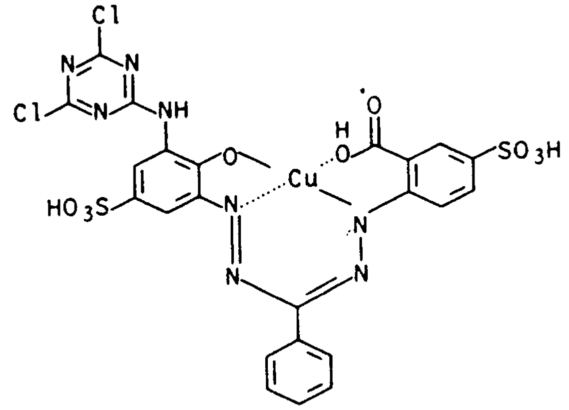

der, wie oben beschrieben, durch Umsetzung von 62 g des Natriumsalzes der Verbindung der Formel

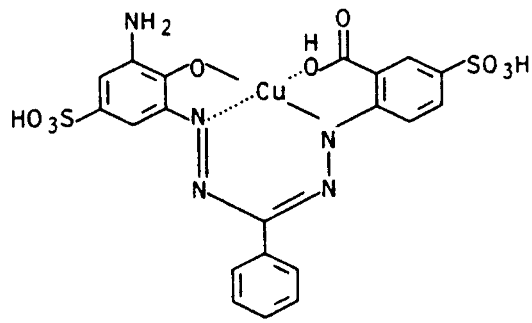

mit 19,5 g Cyanurchlorid hergestellt wurde, versetzt. Die Suspension wurde auf 60 °C erwärmt und der pH-Wert durch Zugabe von Natriumhydrogencarbonat bei 7 bis 7,5 gehalten. Nach 6 Stunden wurde der gebildete Farbstoff der Formel

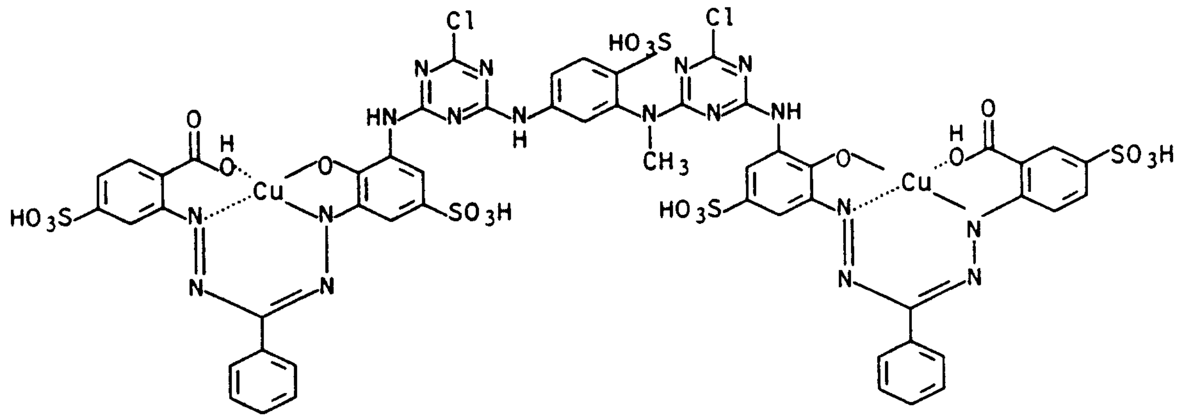

mit Natriumchlorid in Form seines Natriumsalzes ausgesalzen, abfiltriert und getrocknet. Das erhaltene dunkelblaue Farbstoffpulver ist sehr gut wasserlöslich und färbt Baumwolle in klaren blauen Tönen. Die Färbungen sind licht- und naßecht. Sie weisen eine bemerkenswerte Stabilität gegenüber oxidativen Einflüssen auf.

Analog Beispiel 1 erhält man die in Tabelle 1 angegebenen Farbstoffe, die Baumwolle in echten brillanten mittelblauen Tönen färben.

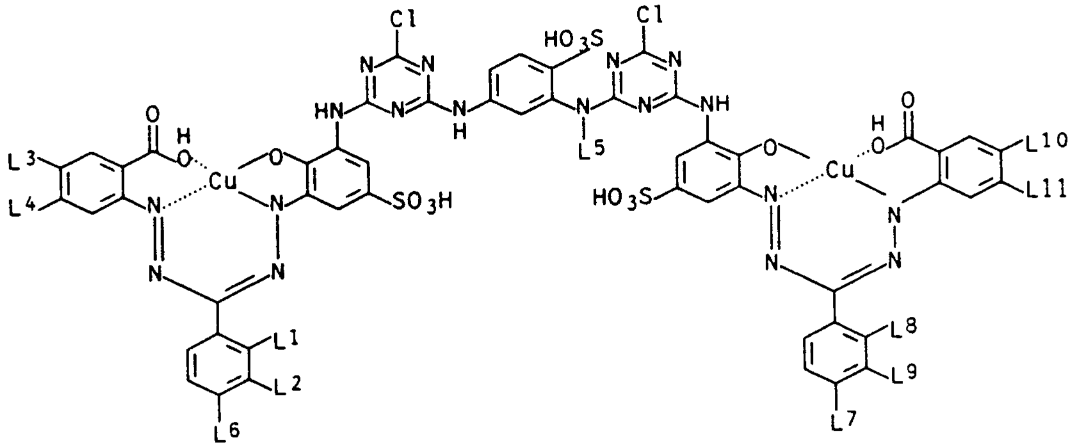

Tabelle 1

| Bsp. Nr. | $L^1$ | $L^2$ | $L^3$ | $L^4$ | $L^5$ | $L^6$ | $L^7$ | $L^8$ | $L^9$ | $L^{10}$ | $L^{11}$ |
|---|---|---|---|---|---|---|---|---|---|---|---|
| 2 | H | H | H | $SO_3H$ | Et | H | H | H | H | $SO_3H$ | H |
| 3 | H | H | $SO_3H$ | H | Me | H | H | H | H | H | $SO_3H$ |
| 4 | H | H | $SO_3H$ | H | Et | H | H | H | H | H | $SO_3H$ |
| 5 | H | H | $SO_3H$ | H | Me | H | H | $SO_3H$ | H | H | $SO_3H$ |
| 6 | H | H | $SO_3H$ | H | Me | H | H | $SO_3H$ | H | $SO_3H$ | H |
| 7 | $SO_3H$ | H | $SO_3H$ | H | Me | H | H | H | H | $SO_3H$ | H |
| 8 | $SO_3H$ | H | $SO_3H$ | H | Me | H | H | H | H | H | $SO_3H$ |
| 9 | $SO_3H$ | H | $SO_3H$ | H | Me | H | H | $SO_3H$ | H | H | $SO_3H$ |
| 10 | $SO_3H$ | H | $SO_3H$ | H | Me | H | H | $SO_3H$ | H | H | H |
| 11 | $SO_3H$ | H | $SO_3H$ | H | Me | H | H | H | $SO_3H$ | H | H |
| 12 | $SO_3H$ | H | $SO_3H$ | H | Me | H | $SO_3H$ | H | H | H | H |
| 13 | H | $SO_3H$ | H | H | Me | H | H | $SO_3H$ | H | H | $SO_3H$ |
| 14 | $SO_3H$ | H | H | H | Me | $SO_3H$ | H | H | H | H | H |
| 15 | H | H | H | $SO_3H$ | Me | H | H | $SO_3H$ | H | $SO_3H$ | H |
| 16 | $SO_3H$ | H | H | $SO_3H$ | Me | H | H | H | H | $SO_3H$ | H |
| 17 | $SO_3H$ | H | H | $SO_3H$ | Me | H | H | $SO_3H$ | H | $SO_3H$ | H |
| 18 | H | H | H | $SO_3H$ | Me | H | H | $SO_3H$ | H | H | $SO_3H$ |
| 19 | $SO_3H$ | H | H | $SO_3H$ | Me | H | H | H | H | H | H |

Beispiel 20

Zu einer Lösung von 62 g des Natriumsalzes der Verbindung der Formel

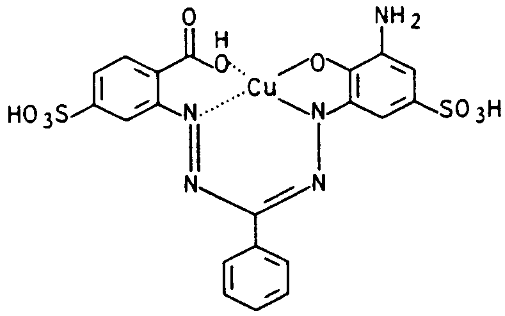

in 150 ml Wasser und 150 g Eis wurden bei 0 °C 14 g Trifluortriazin innerhalb von 30 Minuten getropft und der pH-Wert zwischen 4,9 und 5,2 gehalten. Nach 30 Minuten wurden 95,5 g des Natriumsalzes des Farbstoffs der Formel

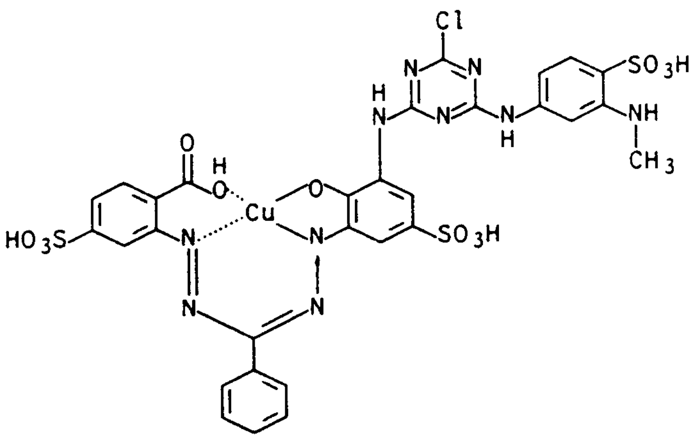

,

der analog der in Beispiel 1 beschriebenen Methode erhalten wurde, hinzugegeben und der pH durch Zugabe von Natriumhydrogencarbonat bei 15 °C während 6 Stunden zwischen 6,5 und 7 gehalten. Danach wurde der gebildete Farbstoff der Formel

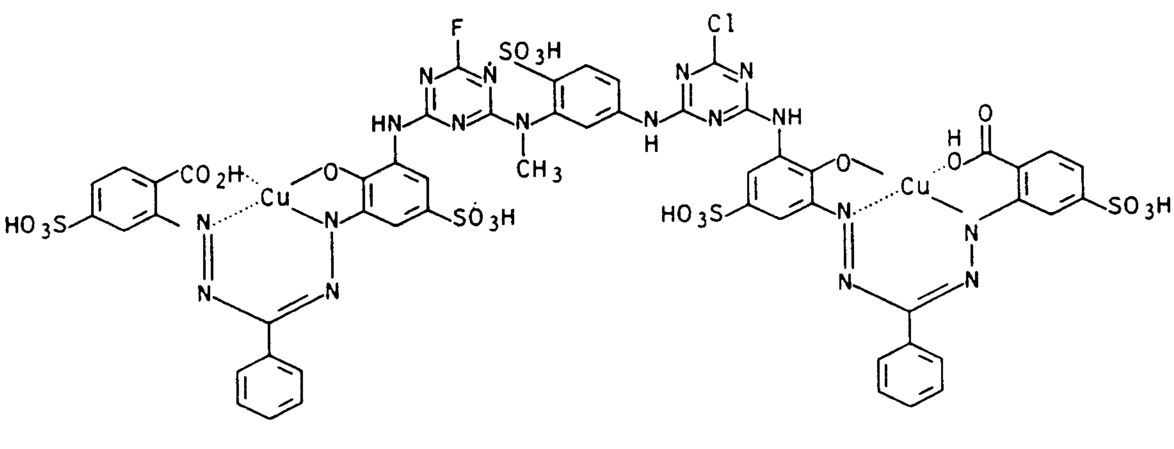

mit Natriumchlorid in Form seines Natriumsalzes ausgesalzen, abfiltriert und getrocknet. Das erhaltene dunkelblaue Farbstoffpulver ist sehr gut wasserlöslich und färbt Baumwolle in klaren blauen Tönen. Die Färbungen sind licht- und naßecht. Sie weisen eine bemerkenswerte Stabilität gegenüber oxidativen Einflüssen auf.

Analog Beispiel 20 erhält man die in Tabelle 2 angegebenen Farbstoffe, die Baumwolle in echten brillanten mittelblauen Tönen färben.

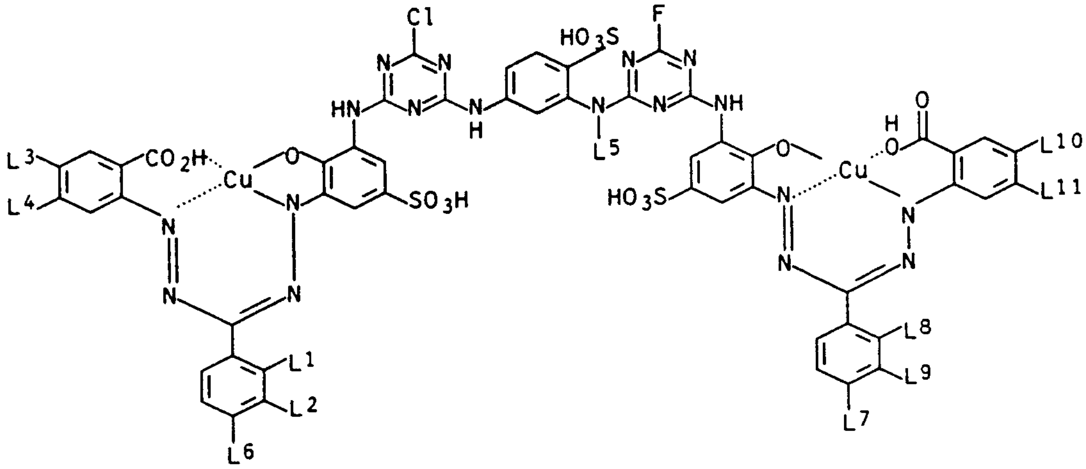

Tabelle 2

| Bsp. Nr. | $L^1$ | $L^2$ | $L^3$ | $L^4$ | $L^5$ | $L^6$ | $L^7$ | $L^8$ | $L^9$ | $L^{10}$ | $L^{11}$ |
|---|---|---|---|---|---|---|---|---|---|---|---|
| 21 | $SO_3H$ | H | H | $SO_3H$ | Me | H | $SO_3H$ | H | H | $SO_3H$ | H |
| 22 | $SO_3H$ | H | $SO_3H$ | H | Me | H | $SO_3H$ | H | $SO_3H$ | H | $SO_3H$ |
| 23 | H | H | $SO_3H$ | H | Me | H | H | H | $SO_3H$ | H | H |
| 24 | H | H | $SO_3H$ | H | Et | H | H | H | $SO_3H$ | H | H |
| 25 | H | H | H | $SO_3H$ | Et | H | H | H | H | $SO_3H$ | |
| 26 | H | H | H | $SO_3H$ | Et | H | H | H | H | $SO_3H$ | H |
| 27 | H | H | $SO_3H$ | H | Me | H | H | H | H | H | $SO_3H$ |
| 28 | H | H | $SO_3H$ | H | Et | H | H | H | H | H | $SO_3H$ |
| 29 | H | H | $SO_3H$ | H | Me | H | H | $SO_3H$ | H | H | $SO_3H$ |
| 30 | H | H | $SO_3H$ | H | Me | H | H | $SO_3H$ | H | $SO_3H$ | H |
| 31 | $SO_3H$ | H | $SO_3H$ | H | Me | H | H | H | H | $SO_3H$ | H |
| 32 | $SO_3H$ | H | $SO_3H$ | H | Me | H | H | H | H | H | $SO_3H$ |
| 33 | $SO_3H$ | H | $SO_3H$ | H | Me | H | H | $SO_3H$ | H | H | $SO_3H$ |
| 34 | $SO_3H$ | H | $SO_3H$ | H | Me | H | H | $SO_3H$ | H | H | H |
| 35 | $SO_3H$ | H | $SO_3H$ | H | Me | H | H | H | $SO_3H$ | H | H |
| 36 | $SO_3H$ | H | $SO_3H$ | H | Me | H | $SO_3H$ | H | H | H | H |

Tabelle 2 (Fortsetzung)

| Bsp. Nr. | $L^1$ | $L^2$ | $L^3$ | $L^4$ | $L^5$ | $L^6$ | $L^7$ | $L^8$ | $L^9$ | $L^{10}$ | $L^{11}$ |
|---|---|---|---|---|---|---|---|---|---|---|---|
| 37 | H | $SO_3H$ | H | H | Me | H | H | $SO_3H$ | H | H | $SO_3H$ |
| 38 | $SO_3H$ | H | H | H | Me | $SO_3H$ | H | H | H | H | H |
| 39 | H | H | H | $SO_3H$ | Me | H | H | $SO_3H$ | H | $SO_3H$ | H |
| 40 | $SO_3H$ | H | H | $SO_3H$ | Me | H | H | H | H | $SO_3H$ | H |
| 41 | $SO_3H$ | H | H | $SO_3H$ | Me | H | H | $SO_3H$ | H | $SO_3H$ | H |
| 42 | H | H | H | $SO_3H$ | Me | H | H | $SO_3H$ | H | H | $SO_3H$ |
| 43 | $SO_3H$ | H | H | $SO_3H$ | Me | H | H | H | H | H | H |

Beispiel 44

Zu einer Lösung von 95,5 g des Natriumsalzes des Farbstoffs der Formel

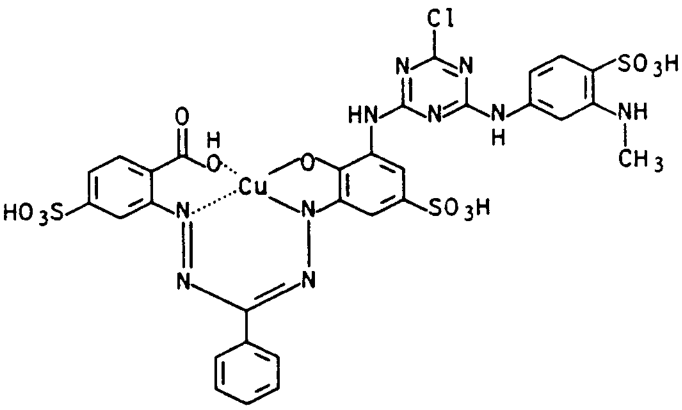

,

der analog Beispiel 1 erhalten wurde, in 150 ml Wasser und 150 g Eis wurden bei 0 °C 19,5 g Cyanurchlorid gegeben. Der pH-Wert des Reaktionsgemisches wurde bis zum Ende der Acylierung durch Zugabe von Natriumhydrogencarbonat bei 5 bis 5,5 gehalten. Nach 3 Stunden bei 5 °C wurde der gebildete Farbstoff der Formel

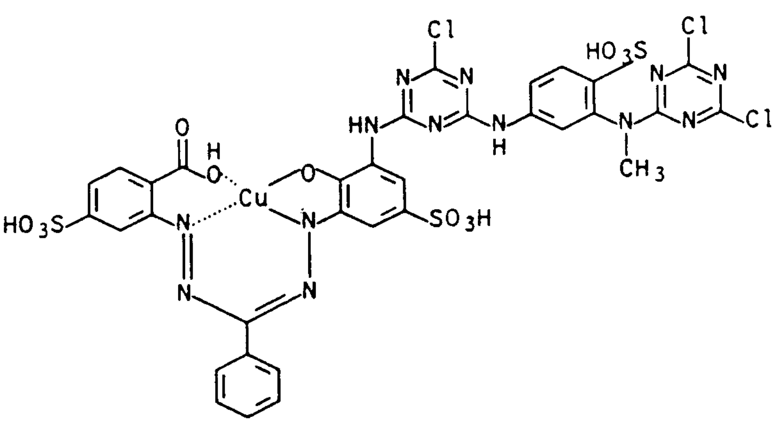

abfiltriert und getrocknet. Das erhaltene dunkelblaue Farbstoffpulver ist sehr gut wasserlöslich und färbt Baumwolle in klaren blauen Tönen. Die Färbungen sind licht- und naßecht. Sie weisen eine bemerkenswerte Stabilität gegenüber oxidativen Einflüssen auf.

Analog Beispiel 44 erhält man die in Tabelle 3 angegebenen Farbstoffe, die Baumwolle in echten brillanten mittelblauen Tönen färben.

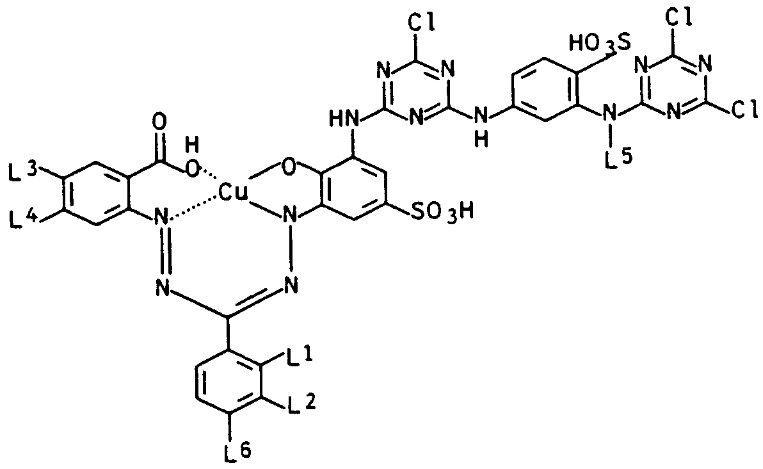

Tabelle 3

| Bsp. Nr. | $L^1$ | $L^2$ | $L^3$ | $L^4$ | $L^5$ | $L^6$ |
|---|---|---|---|---|---|---|
| 45 | H | H | H | $SO_3H$ | Et | H |
| 46 | H | H | $SO_3H$ | H | Me | H |
| 47 | H | H | $SO_3H$ | H | Et | H |
| 48 | $SO_3H$ | H | $SO_3H$ | H | Me | H |
| 49 | $SO_3H$ | H | H | $SO_3H$ | Me | H |
| 50 | H | $SO_3H$ | H | $SO_3H$ | Me | H |
| 51 | $SO_3H$ | H | H | H | Me | H |
| 52 | $SO_3H$ | H | H | H | Me | $SO_3H$ |

Beispiel 53

Zu einer Lösung von 111,5 g des Natriumsalzes des Farbstoffs der Formel

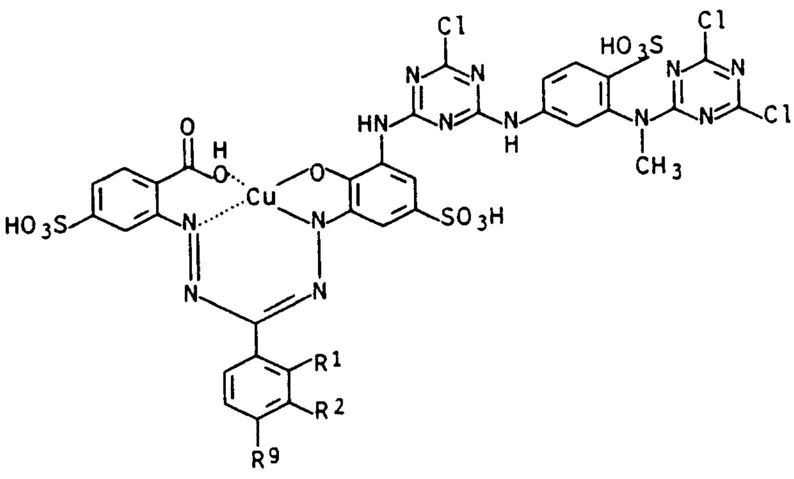

,

der analog Beispiel 44 erhalten wurde, in 300 ml Wasser wurden bei 20 °C 18 g 3-Aminobenzolsulfonsäure gegeben und bei 40 °C 3 Stunden gerührt. Der pH-Wert wurde während dieser Zeit durch Zugabe von Natriumhydrogencarbonat zwischen 6,5 und 7,5 gehalten. Danach wurde der gebildete Farbstoff der Formel

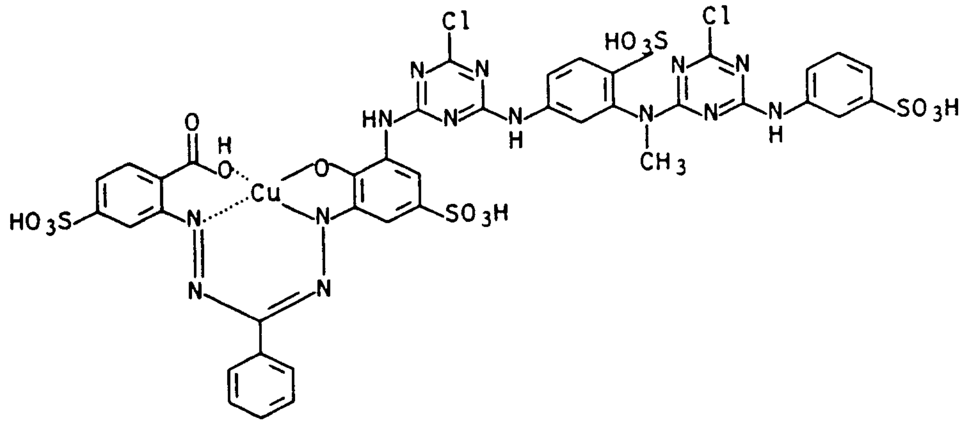

mit Natriumchlorid in Form seines Natriumsalzes ausgesalzen, abfiltriert und getrocknet. Das erhaltene dunkelblaue Farbstoffpulver ist sehr gut wasserlöslich und färbt Baumwolle in klaren blauen Tönen. Die Färbungen sind licht- und naßecht. Sie weisen eine bemerkenswerte Stabilität gegenüber oxidativen Einflüssen auf.

Analog Beispiel 53 erhält man die in Tabelle 4 angegebenen Farbstoffe, die Baumwolle in echten brillanten mittelblauen Tönen färben.

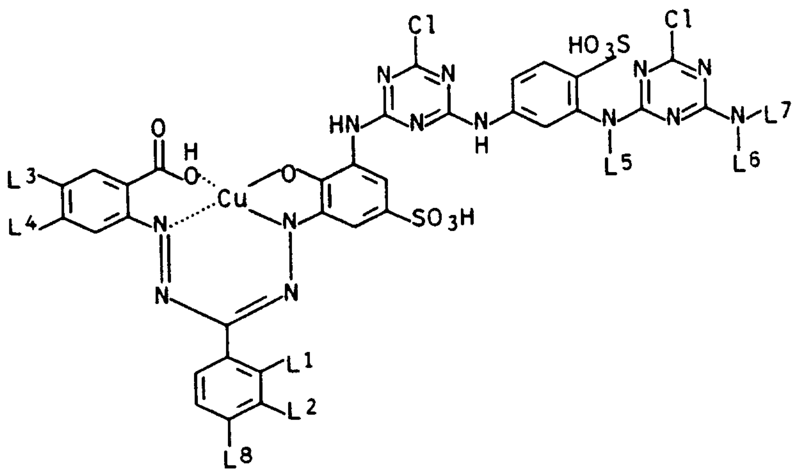

Tabelle 4

| Bsp. Nr. | $L^1$ | $L^2$ | $L^3$ | $L^4$ | $L^5$ | $L^6$ | $L^7$ | $L^8$ |
|---|---|---|---|---|---|---|---|---|
| 54 | H | H | H | $SO_3H$ | Et | H | 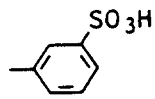 | H |
| 55 | H | H | H | $SO_3H$ | Me | H | 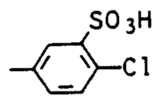 | H |
| 56 | H | H | H | $SO_3H$ | Me | H | 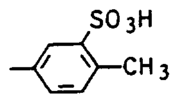 | H |
| 57 | H | H | $SO_3H$ | H | Me | H | 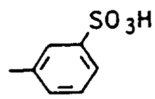 | H |
| 58 | H | H | H | $SO_3H$ | Me | H | H | H |
| 59 | H | H | H | $SO_3H$ | Et | H | H | H |
| 60 | H | H | H | $SO_3H$ | Me | Me | 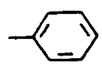 | H |
| 61 | H | H | H | $SO_3H$ | Et | Me | 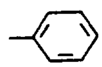 | H |
| 62 | H | H | H | $SO_3H$ | Me | Et | 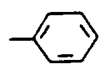 | H |
| 63 | H | H | $SO_3H$ | H | Me | Me | 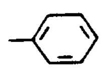 | H |

Tabelle 4 (Fortsetzung)

| Bsp. Nr. | $L^1$ | $L^2$ | $L^3$ | $L^4$ | $L^5$ | $L^6$ | $L^7$ | $L^8$ |
|---|---|---|---|---|---|---|---|---|
| 64 | H | H | $SO_3H$ | H | Me | H | H | H |
| 65 | H | H | $SO_3H$ | H | Me | Et | H | H |
| 66 | $SO_3H$ | H | $SO_3H$ | $SO_3H$ | Et | H | H | Me |
| 67 | $SO_3H$ | H | H | $SO_3H$ | Me | H | H | H |
| 68 | $SO_3H$ | H | H | $SO_3H$ | Me | H | H | H |
| 69 | $SO_3H$ | H | H | H | Me | H | H | $SO_3H$ |
| 70 | H | $SO_3H$ | H | $SO_3H$ | Me | H | H | H |

Beispiel 71

Zu einer Lösung von 111,5 g des Natriumsalzes des Farbstoffs der Formel

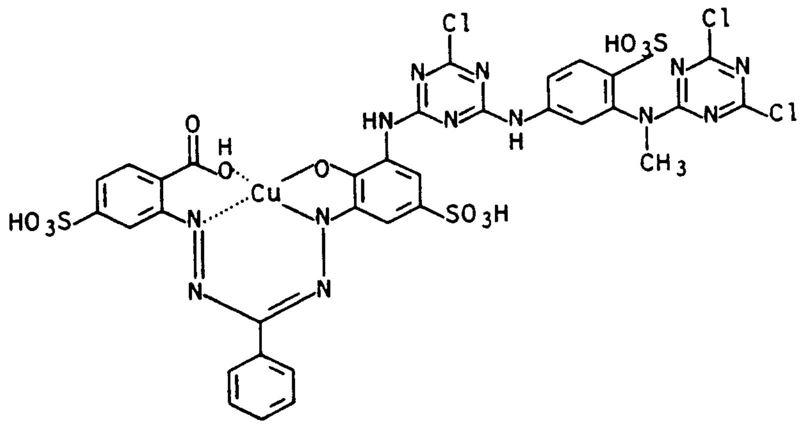

,

der analog Beispiel 44 erhalten wurde, in 1000 ml Wasser wurden 95,5 g des Natriumsalzes des Farbstoffs der Formel

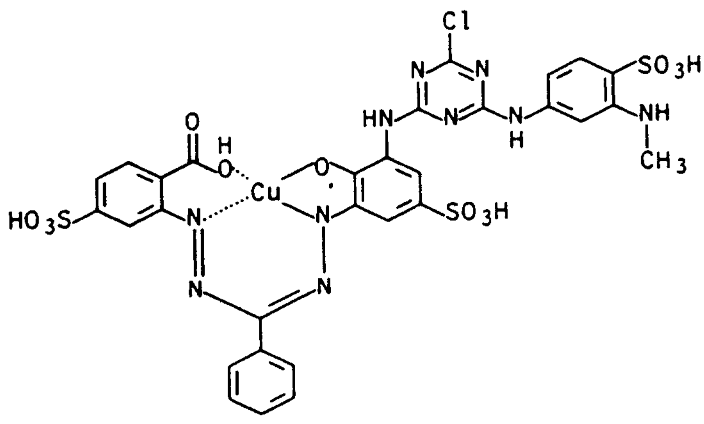

der analog Beispiel 1 erhalten wurde, hinzugegeben und die Suspension bei 60 °C durch Zugabe von Natriumhydrogencarbonat bei einem pH-Wert von 6,5 bis 7,0 gehalten. Nach 6 Stunden wurde der gebildete Farbstoff der Formel

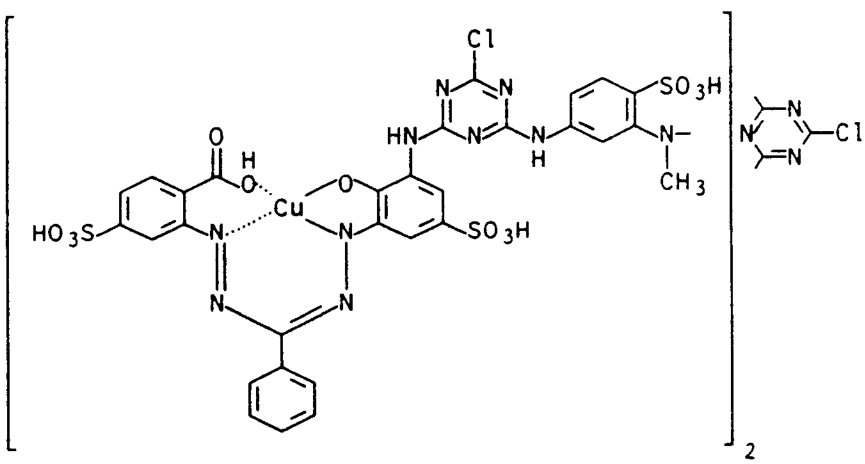

mit Natriumchlorid in Form seines Natriumsalzes ausgesalzen, abfiltriert und getrocknet. Das erhaltene dunkelblaue Farbstoffpulver ist sehr gut wasserlöslich und färbt Baumwolle in klaren blauen Tönen. Die Färbungen sind licht- und naßecht. Sie weisen eine bemerkenswerte Stabilität gegenüber oxidativen Einflüssen auf.

Analog Beispiel 71 erhält man die in Tabelle 5 angegebenen Farbstoffe, die Baumwolle in echten brillanten mittelblauen Tönen färben.

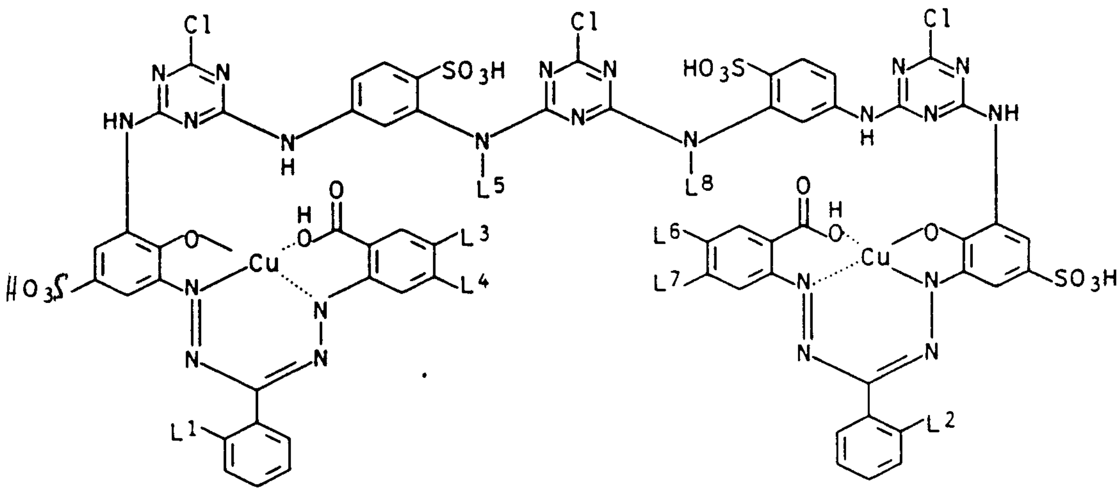

Tabelle 5

| Bsp. Nr. | $L^1$ | $L^2$ | $L^3$ | $L^4$ | $L^5$ | $L^6$ | $L^7$ | $L^8$ |
|---|---|---|---|---|---|---|---|---|
| 72 | H | $SO_3H$ | H | H | Me | $SO_3H$ | H | Me |
| 73 | H | $SO_3H$ | H | H | Me | H | $SO_3H$ | Me |
| 74 | H | $SO_3H$ | H | H | Me | $SO_3H$ | H | Et |
| 75 | H | $SO_3H$ | H | H | Me | H | $SO_3H$ | Et |
| 76 | H | H | $SO_3H$ | H | Me | $SO_3H$ | H | Et |
| 77 | H | H | $SO_3H$ | H | Me | H | $SO_3H$ | Et |
| 78 | H | H | $SO_3H$ | H | Et | H | $SO_3H$ | Et |
| 79 | $SO_3H$ | H | $SO_3H$ | H | Me | H | $SO_3H$ | Me |
| 80 | $SO_3H$ | $SO_3H$ | H | H | Me | $SO_3H$ | H | Me |
| 81 | $SO_3H$ | $SO_3H$ | H | $SO_3H$ | Me | $SO_3H$ | H | Me |

Beispiel 82

Zu einer Lösung von 70 g des Natriumsalzes der Verbindung der Formel

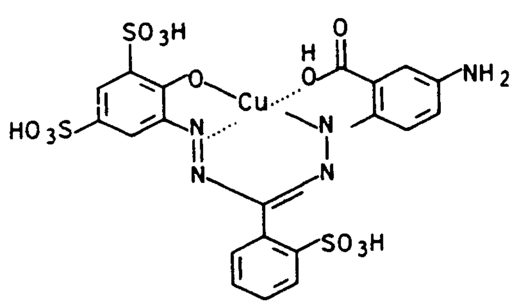

in 150 ml Wasser und 150 g Eis wurden bei 0 °C 14 g Trifluortriazin innerhalb von 30 Minuten eingetropft und der pH-Wert zwischen 4,9 und 5,2 gehalten. Nach 30 Minuten wurden 20 g 3-(N-Methylamino)-4-hydroxysulfonylanilin hinzugegeben und der pH-Wert mit Natriumhydrogencarbonat zwischen 6,5 und 7,0 gehalten. Nach 30 Minuten wurden hierzu 78 g des Dichlortriazinfarbstoffs der Formel

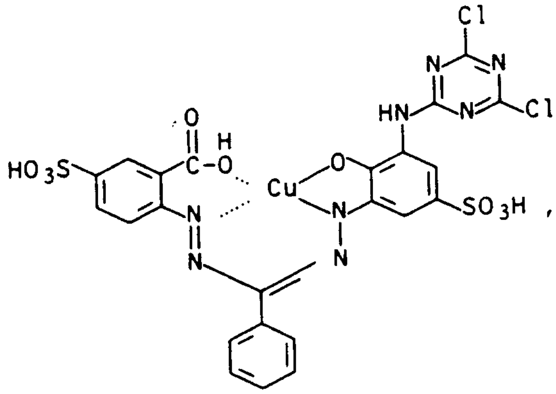

der wie in Beispiel 1 beschrieben, erhalten wurde, hinzugegeben und der pH-Wert mit Natriumhydrogencarbonat zwischen 7 und 7,5 gehalten. Nach 6 Stunden wurde der gebildete Farbstoff der Formel

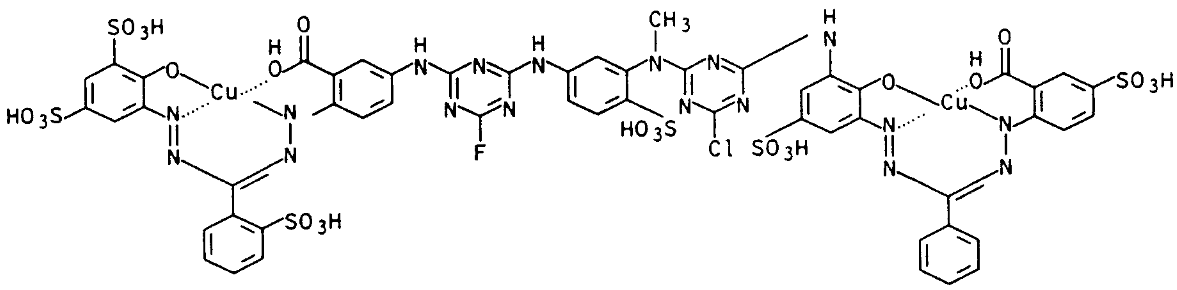

mit Natriumchlorid in Form seines Natriumsalzes ausgesalzen, abfiltriert und getrocknet. Das erhaltene dunkelblaue Farbstoffpulver ist sehr gut wasserlöslich und färbt Baumwolle in klaren blauen Tönen. Die Färbungen sind licht- und naßecht. Sie weisen eine bemerkenswerte Stabilität gegenüber oxidativen Einflüssen auf.

Analog Beispiel 82 erhält man die in Tabelle 6 angegebenen Farbstoffe, die Baumwolle in echten brillanten mittelblauen Tönen färben.

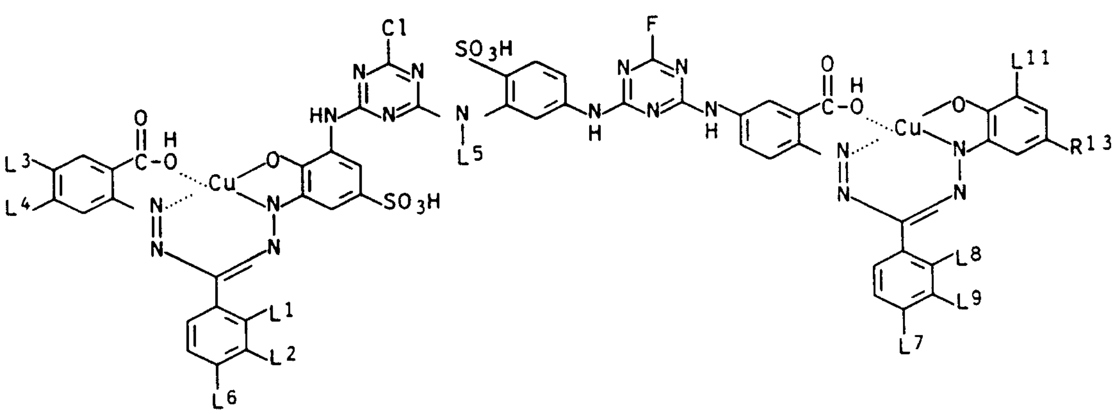

Tabelle 6

| Bsp. Nr. | $L^1$ | $L^2$ | $L^3$ | $L^4$ | $L^5$ | $L^6$ | $L^7$ | $L^8$ | $L^9$ | $L^{10}$ | $L^{11}$ |
|---|---|---|---|---|---|---|---|---|---|---|---|
| 83 | H | H | H | $SO_3H$ | $CH_3$ | H | H | $SO_3H$ | H | $SO_3H$ | $SO_3H$ |
| 84 | H | H | H | $SO_3H$ | $C_2H_5$ | H | H | $SO_3H$ | H | $SO_3H$ | $SO_3H$ |
| 85 | $SO_3H$ | H | H | $SO_3H$ | $CH_3$ | H | H | $SO_3H$ | H | $SO_3H$ | H |
| 86 | $SO_3H$ | H | H | $SO_3H$ | $CH_3$ | H | $SO_3H$ | $SO_3H$ | H | H | H |
| 87 | H | $SO_3H$ | H | $SO_3H$ | $CH_3$ | H | $SO_3H$ | $SO_3H$ | H | H | H |
| 88 | H | H | H | $SO_3H$ | $CH_3$ | H | H | H | $SO_3H$ | $SO_3H$ | $SO_3H$ |
| 89 | H | H | $SO_3H$ | H | $C_2H_5$ | H | H | $SO_3H$ | H | $SO_3H$ | $SO_3H$ |
| 90 | $SO_3H$ | H | $SO_3H$ | H | $CH_3$ | $SO_3H$ | H | $SO_3H$ | H | H | H |

Beispiel 91

Zu einer Lösung von 70 g des Natriumsalzes der Verbindung der Formel

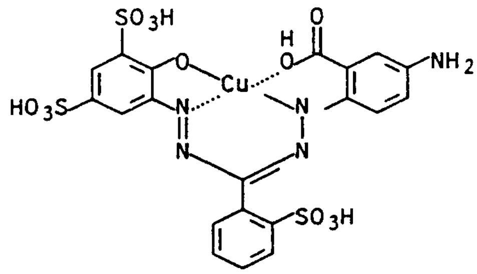

in 150 Wasser und 150 g Eis wurden bei 0 °C 19 g Trichlortriazin innerhalb von 30 Minuten hinzugegeben und der pH-Wert zwischen 4,9 und 5,2 gehalten. Nach 30 Minuten wurden 95,5 g des Natriumsalzes des Farbstoffs der Formel

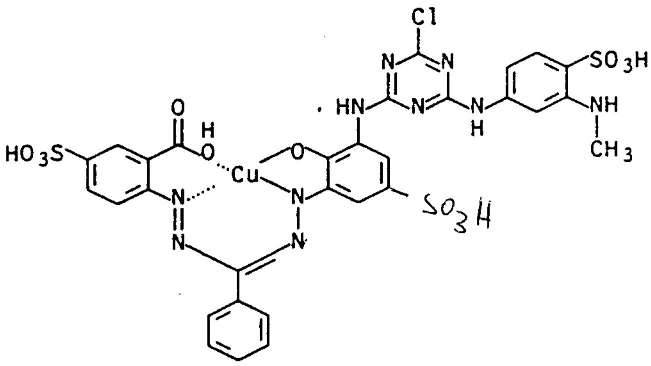

,

der analog der in Beispiel 1 beschriebenen Methode erhalten wurde, hinzugegeben und der pH-Wert durch Zugabe von $NaHCO_3$ bei 15 °C während 6 Stunden zwischen 6,5 und 7 gehalten. Danach wurde der gebildete Farbstoff der Formel

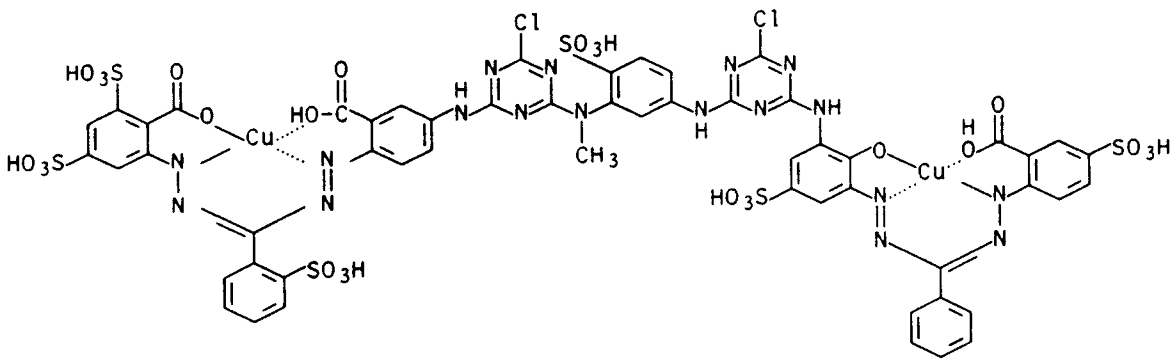

mit Natriumchlorid in Form seines Natriumsalzes ausgesalzen, abfiltriert und getrocknet. Das erhaltene dunkelblaue Farbstoffpulver ist sehr gut wasserlöslich und färbt Baumwolle in klaren blauen Tönen. Die Färbungen sind licht- und naßecht. Sie weisen eine bemerkenswerte Stabilität gegenüber oxidativen Einflüssen auf.

Analog Beispiel 91 erhält man die in Tabelle 7 angegebenen Farbstoffe, die Baumwolle in echten brillanten mittelblauen Tönen färben.

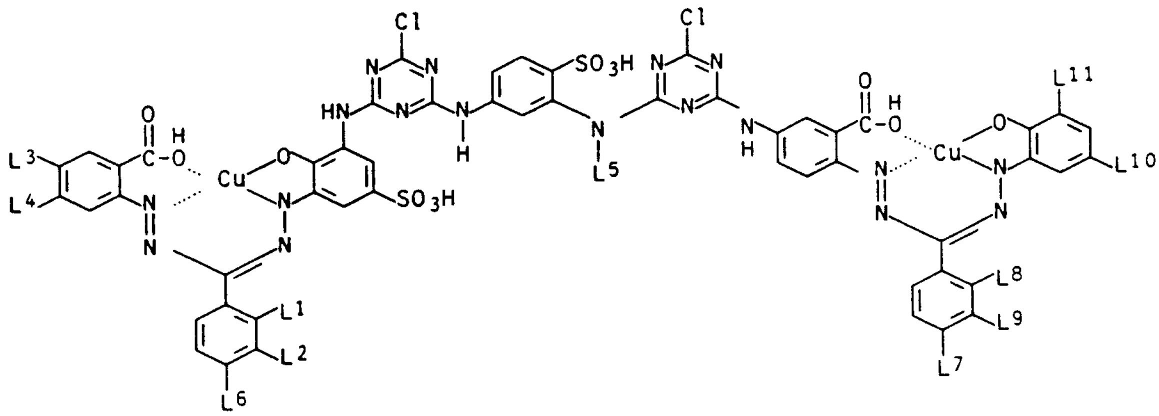

Tabelle 7

| Bsp. Nr. | $L^1$ | $L^2$ | $L^3$ | $L^4$ | $L^5$ | $L^6$ | $L^7$ | $L^8$ | $L^9$ | $L^{10}$ | $L^{11}$ |
|---|---|---|---|---|---|---|---|---|---|---|---|
| 92 | H | H | H | $SO_3H$ | $CH_3$ | H | H | $SO_3H$ | H | $SO_3H$ | $SO_3H$ |
| 93 | H | H | H | $SO_3H$ | $C_2H_5$ | H | H | $SO_3H$ | H | $SO_3H$ | $SO_3H$ |
| 94 | $SO_3H$ | H | H | $SO_3H$ | $CH_3$ | H | H | $SO_3H$ | H | $SO_3H$ | H |
| 95 | $SO_3H$ | H | H | $SO_3H$ | $CH_3$ | H | $SO_3H$ | $SO_3H$ | H | H | H |
| 96 | H | $SO_3H$ | H | $SO_3H$ | $CH_3$ | H | $SO_3H$ | $SO_3H$ | H | H | H |
| 97 | H | H | H | $SO_3H$ | $CH_3$ | H | H | H | $SO_3H$ | $SO_3H$ | $SO_3H$ |
| 98 | H | H | $SO_3H$ | H | $C_2H_5$ | H | H | $SO_3H$ | H | $SO_3H$ | $SO_3H$ |
| 99 | $SO_3H$ | H | $SO_3H$ | H | $CH_3$ | $SO_3H$ | H | $SO_3H$ | H | H | H |

## Patentansprüche

**1.** Kupfer-Formazanreaktivfarbstoffe der Formel I

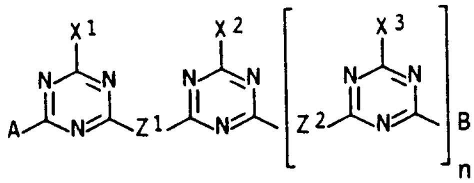

(I)

in Form der freien Säure oder in Form ihrer Salze, wobei

n 0 oder 1,
$X^1$ und $X^3$ gleich oder verschieden sind und unabhängig voneinander jeweils Chlor oder Fluor,
$X^2$ Chlor,
A einen Rest der Formel IIa

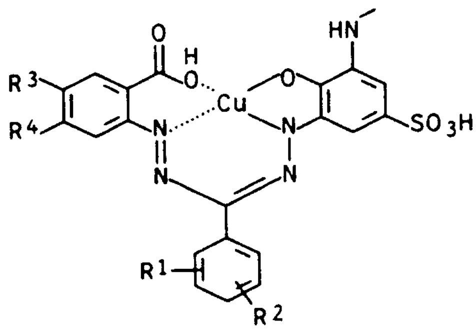

(IIa),

worin

$R^1$ für Wasserstoff, Hydroxysulfonyl, $C_1$-$C_4$-Alkoxy oder Chlor,
$R^2$ für Wasserstoff oder Hydroxysulfonyl und

einer der beiden Reste $R^3$ und $R^4$ für Wasserstoff und der andere für Hydroxysulfonyl stehen, oder wenn mindestens einer der beiden Reste $R^1$ und $R^2$ Hydroxysulfonyl ist, $R^3$ und $R^4$ auch gleichzeitig Wasserstoff sein können, oder einen Rest

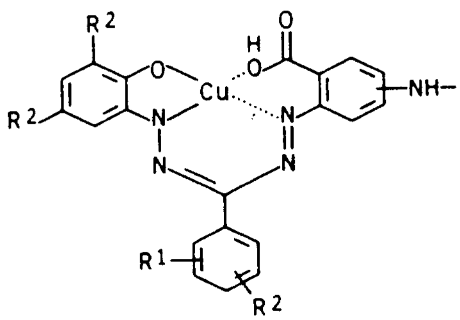

(IIb),

worin

$R^1$ und $R^2$ jeweils die obengenannte Bedeutung besitzen,
$Z^1$ und $Z^2$ gleich oder verschieden sind und unabhängig voneinander jeweils einen Rest der Formel III

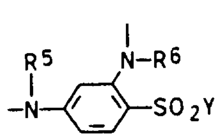

(III),

worin

- $R^5$ und $R^6$ gleich oder verschieden sind und unabhängig voneinander jeweils für Wasserstoff oder gegebenenfalls durch Cyano oder Hydroxy substituiertes $C_1$-$C_4$-Alkyl und
- Y für Hydroxy oder den Rest $NR^7R^8$ stehen, in dem $R^7$ und $R^8$ gleich oder verschieden sind und unabhängig voneinander jeweils die Bedeutung von Wasserstoff oder von gegebenenfalls durch Cyano, Hydroxy oder Hydroxysulfonyl substituiertem $C_1$-$C_4$-Alkyl besitzen, oder die Reste $R^7$ und $R^8$ zusammen mit dem sie verbindenden Stickstoffatom einen 5- oder 6-gliedrigen Heterocyclus, der gegebenenfalls weitere Heteroatome aufweist, darstellen, und
- B Chlor, den Rest $NR^9R^{10}$, in dem $R^9$ und $R^{10}$ gleich oder verschieden sind und unabhängig voneinander jeweils die Bedeutung von Wasserstoff oder von gegebenenfalls durch Cyano, Hydroxy oder Hydroxysulfonyl substituiertem $C_1$-$C_4$-Alkyl besitzen oder einer der beiden Reste $R^9$ oder $R^{10}$ auch für Phenyl steht, das gegebenenfalls durch Hydroxysulfonyl, Sulfamoyl, $C_1$-$C_4$-Alkyl, Halogen, Cyano oder $C_1$-$C_4$-Alkoxy substituiert ist, oder die Reste $R^9$ und $R^{10}$ zusammen mit dem sie verbindenden Stickstoffatom einen 5-oder 6-gliedrigen Heterocyclus, der gegebenenfalls weitere Heteroatome aufweist, darstellen, oder den obengenannten Rest A bedeuten,

mit der Maßgabe, a) daß $R^5$ und $R^6$ nicht gleichzeitig für Wasserstoff stehen, b) daß wenn n O und B den Rest A bedeuten, mindestens ein Restepaar A/B oder $X^1/X^2$ verschieden ist, c) daß wenn n 1 bedeutet, der Rest B für den Rest A steht, und d) daß $X^2$ auch für Fluor steht, wenn B nicht Chlor bedeutet.

**2.** Verwendung der Kupfer-Formazanreaktivfarbsstoffe gemäß Anspruch 1 zum Färben oder Bedrucken von Hydroxygruppen oder Stickstoff enthaltenden Substraten.

## Claims

**1.** A copper formazan reactive dye of the formula I

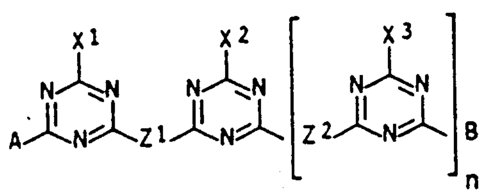

(I)

in the form of the free acid or in the form of a salt thereof, wherein

- n is 0 or 1,
- $X^1$ and $X^3$ are identical or different, each being independently of the other chlorine or fluorine,
- $X^2$ is chlorine, and
- A is a radical of the formula IIa

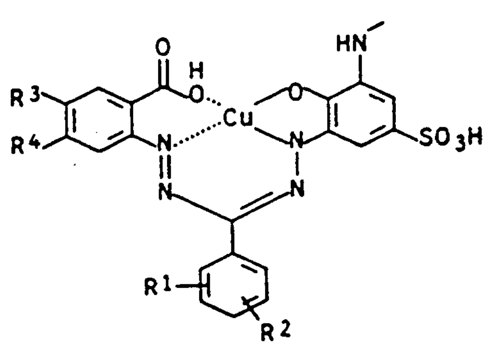

(IIa)

where

- $R^1$ is hydrogen, hydroxysulfonyl, $C_1$-$C_4$-alkoxy or chlorine,
- $R^2$ is hydrogen or hydroxysulfonyl and

one of the two radicals $R^3$ and $R^4$ is hydrogen and the other is hydroxysulfonyl, or if at least one of the two radicals $R^1$ and $R^2$ is hydroxysulfonyl, $R^3$ and $R^4$ can each at the same time also be hydrogen, or a radical of the formula IIb

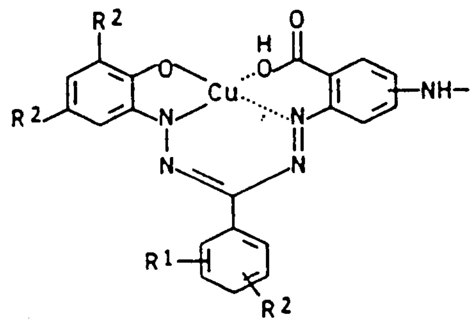

(IIb)

where

$R^1$ and $R^2$ are each as defined above,

$Z^1$ and $Z^2$ are identical or different, each being independently of the other a radical of the formula III

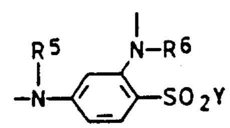

(III)

where

$R^5$ and $R^6$ are identical or different, each being independently of the other hydrogen or unsubstituted or cyano- or hydroxyl-substituted $C_1$-$C_4$-alkyl and

Y is hydroxyl or the radical $NR^7R^8$, where $R^7$ and $R^8$ are identical or different, each being independently of the other hydrogen or unsubstituted or cyano-, hydroxyl- or hydroxysulfonyl-substituted $C_1$-$C_4$-alkyl, or the radicals $R^7$ and $R^8$ together with the nitrogen atom joining them are a 5- or 6-membered heterocycle which may contain further hetero atoms, and

B is chlorine, the radical $NR^9R^{10}$, where $R^9$ and $R^{10}$ are identical or different, each being independently of the other hydrogen or unsubstituted or cyano-, hydroxyl- or hydroxysulfonyl-substituted $C_1$-$C_4$-alkyl, or one of the two radicals $R^9$ and $R^{10}$ may also be phenyl which may be substituted by hydroxysulfonyl, sulfamoyl, $C_1$-$C_4$-alkyl, halogen, cyano or $C_1$-$C_4$-alkoxy, or the radicals $R^9$ and $R^{10}$ together with the nitrogen atom joining them are a 5- or 6-membered heterocycle which may contain further hetero atoms, or is the abovementioned radical A,

with the proviso that a) $R^5$ and $R^6$ are not both hydrogen, b) when n is O and B is A, at least one of the pairs A/B and $X^1$/$X^2$ is different, c) when n is 1, B is A, and d) $X^2$ may also be fluorine when B is not chlorine.

**2.** The use of a copper formazan reactive dye as claimed in claim 1 for dyeing or printing hydroxyl- or nitrogen-containing substrates.

## Revendications

1. Colorant réactif cuivre-formazan répondant à la formule (I)

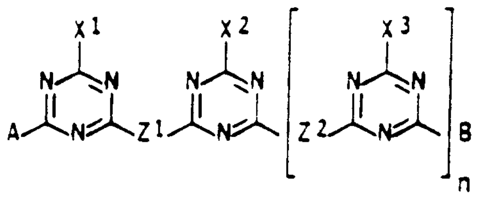

(I)

sous forme d'acides libres ou de leurs sels, dans laquelle
n vaut 0 ou 1,
$X^1$ et $X^3$ sont identiques ou différents et représentent chacun, indépendamment l'un de l'autre, le chlore ou le fluor,
$X^2$ est le chlore,
A est un radical répondant à la formule (IIa)

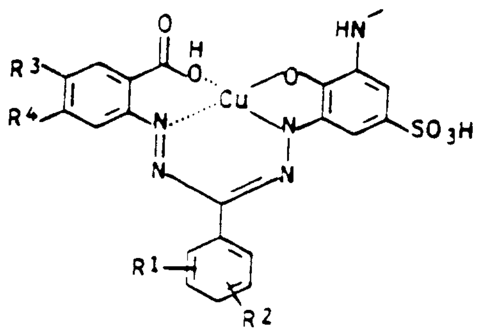

(IIa),

dans laquelle
$R^1$ est un hydrogène ou un radical hydroxysulfonyle, alcoxy en $C_1$-$C_4$ ou chloro,
$R^2$ est un hydrogène ou un radical hydroxysulfonyle, et
l'un des deux radicaux $R^3$ et $R^4$ est un hydrogène et l'autre est le radical hydroxysulfonyle, ou encore, quand au moins l'un des deux radicaux $R^1$ et $R^2$ est le radical hydroxysulfonyle, $R^3$ et $R^4$ peuvent également être chacun simultanément un hydrogène, ou encore un radical

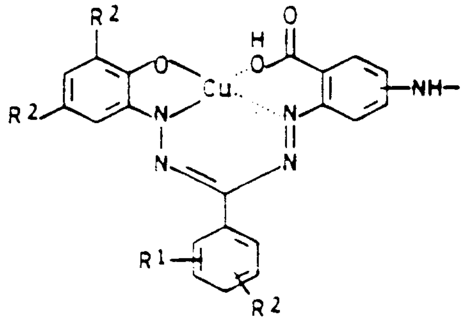

(IIb),

dans lequel
$R^1$ et $R^2$ ont chacun les significations données ci-dessus,
$Z^1$ et $Z^2$ sont identiques ou différents et représentent chacun, indépendamment l'un de l'autre, un radical répondant à la formule (III)

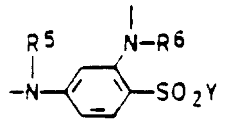

(III),

où

$R^5$ et $R^6$ sont identiques ou différents et représentent chacun, indépendamment l'un de l'autre, un hydrogène ou un radical alkyle en $C_1$-$C_4$ éventuellement substitué par des substituants cyano ou hydroxy, et

Y est un radical hydroxy ou représente le radical $NR^7R^8$, dans lequel $R^7$ et $R^8$ sont identiques ou différents et représentent chacun indépendamment l'un de l'autre un hydrogène ou un radical alkyle en $C_1$-$C_4$ éventuellement substitué par des substituants cyano, hydroxy ou hydroxysulfonyle, ou encore les radicaux $R^7$ et $R^8$, avec l'atome d'azote qui les relie, forment un hétérocycle à 5 ou 6 chaînons pouvant éventuellement porter des hétéroatomes supplémentaires, et

B est le chlore, le radical $NR^9R^{10}$, dans lequel $R^9$ et $R^{10}$ sont identiques ou différents et représentent chacun indépendamment l'un de l'autre un hydrogène ou un radical alkyle en $C_1$-$C_4$ éventuellement substitué par des substituants cyano, hydroxy ou hydroxysulfonyle, ou encore l'un des deux radicaux $R^9$ ou $R^{10}$ peut également être le radical phényle, éventuellement substitué par des substituants hydroxysulfonyle, sulfamoyle, alkyle en $C_1$-$C_4$,halogéno, cyano ou alcoxy en $C_1$-$C_4$, ou encore les radicaux $R^9$ et $R^{10}$, avec l'atome d'azote qui les relie, forment un hétérocycle à 5 ou 6 chaînons comportant éventuellement des hétéro-atomes supplémentaires, ou encore représentent le radical A ci-dessus,

sous réserve que a) $R^5$ et $R^6$ ne soient pas chacun simultanément un hydrogène, b) lorsque n vaut 0 et B est le radical A, au moins une paire de radicaux A/B ou $X^1/X^2$ contienne des radicaux différents, c) quand n vaut 1, le radical B corresponde au radical A, et d) $X^2$ soit aussi le fluor lorsque B n'est pas le chlore.

**2.** Utilisation des colorants réactifs de cuivre-formazan selon la revendication 1 pour teindre ou imprimer des substrats contenant des groupes hydroxy ou de l'azote.